# FASCICULE DE BREVET EUROPEEN

(11) **EP 0 713 349 B1**
(45) Date de publication et mention de la délivrance du brevet: **25.08.1999**
(21) Numéro de dépôt: 95402523.5
(22) Date de dépôt: 10.11.1995
(51) Int. Cl.: H05B 6/12, H05B 6/06

(54) **Appareil de cuisson à induction à rayonnement parasite réduit**
Induktionskochgerät mit reduzierter Störstrahlung
Induction cooking apparatus with reduced stray radiation

(30) Priorité: 15.11.1994 FR 9413651
(43) Date de publication de la demande: 22.05.1996
(73) Titulaire: COMPAGNIE EUROPEENNE POUR L'EQUIPEMENT MENAGER "CEPEM", F-45140 St Jean-de-la-Ruelle (FR)
(72) Inventeur: Gaspard, Jean-Yves, F-92402 Courbevoie Cedex (FR)
(74) Mandataire: Beylot, Jacques

(56) Documents cités:
- FR-A- 2 200 722
- US-A- 3 996 442
- US-A- 4 163 139
- US-A- 4 426 564
- PATENT ABSTRACTS OF JAPAN vol. 016 no. 554 (E-1293) ,25 Novembre 1992 & JP-A-04 209489 (SHARP CORP) 30 Juillet 1992,

## Description

La présente invention a pour but de proposer un perfectionnement dans les systèmes de blindage contre les perturbations électromagnétiques générées par un inducteur utilisé dans les appareils de cuisson à induction.

Dans un appareil de cuisson à induction, un foyer de cuisson est classiquement constitué par un inducteur, comprenant une ou plusieurs bobines, concentriques ou non, l'inducteur étant alimenté par un générateur délivrant un courant alternatif d'une fréquence de l'ordre de 20 à 50 KHz. L'inducteur parcouru par ce courant produit, par induction, dans les parois et le fond d'un récipient situé au-dessus de cet inducteur, des courants qui échauffent le récipient, puis la substance à cuire dans le récipient.

On sait qu'un tel inducteur est susceptible de générer des champs électromagnétiques parasites, encore appelés perturbations rayonnées, vers l'extérieur de l'appareil de cuisson. Une telle situation se présente par exemple lorsque le récipient à chauffer possède un diamètre inférieur à la taille de l'inducteur.

Outre la déperdition inutile de champs électromagnétiques produits par l'inducteur, ces champs parasites provoquent des perturbations dans le fonctionnement d'appareils radio-électriques situés à proximité de l'appareil de cuisson. Il est donc nécessaire de les minimiser au mieux.

Par ailleurs, par construction, un inducteur induit non seulement un champ électromagnétique en direction du récipient à chauffer, mais aussi un champ électromagnétique arrière, c'est-à-dire sous l'inducteur, ce qui risque de nuire au bon fonctionnement des composants électroniques de l'appareil, et de générer des perturbations conduites.

Pour réduire les perturbations rayonnées et/ou conduites dues à des champs électromagnétiques parasites rayonnés, diverses techniques ont déjà été proposées.

Par exemple le brevet américain US-4,426,564 décrit un foyer de cuisson par induction comportant un inducteur et un onduleur qui fournit à l'inducteur un courant alternatif haute fréquence et qui est alimenté par un réseau d'énergie électrique basse fréquence au travers d'un filtre haute fréquence, et propose de connecter, en parallèle sur l'inducteur, un condensateur permettant d'accorder l'inducteur sur la fréquence du courant haute fréquence de l'onduleur afin de présenter à l'onduleur une charge accordée et de donner au courant qui traverse l'inducteur une forme presque sinusoïdale.

II est également connu, pour minimiser le champ électromagnétique parasite rayonné vers l'extérieur, d'accompagner la bobine de l'inducteur d'une contre-spire, par exemple d'une bobine de compensation enroulée autour de la bobine de chauffage de manière que le courant parcourant cette bobine soit opposé en sens au courant parcourant la bobine de chauffage. Les résultats obtenus par cette méthode ne sont cependant pas optimaux. Par ailleurs, cette méthode s'adapte mal au cas où l'inducteur est constitué de plusieurs bobines de chauffage disposées concentriquement. En effet, si l'on place une unique contre-spire autour de la bobine externe, les champs électromagnétiques parasites créés par les bobines internes ne sont pas compensés. Cependant, si l'on place une contre-spire entre chaque bobine de chauffage, elle risque de perturber le fonctionnement de l'appareil si elle est recouverte par un récipient (baisse de réactance de la bobine, échauffement par courants de Foucault dans la contre-spire difficile à dissiper, zones froides sur les parois du récipient dues à l'annulation locale du champ magnétique...).

Par ailleurs, on sait également que l'on peut éviter les rayonnements parasites arrières de l'inducteur en utilisant un circuit magnétique à base de ferrites, situé sous l'inducteur. Un tel circuit magnétique présente cependant des limitations lors du fonctionnement car il peut perdre dans certaines conditions, ses propriétés magnétiques, notamment si la température des ferrites utilisées atteint la température de Curie correspondant à ces ferrites.

Une autre solution, connue et décrite par exemple dans la demande de brevet français FR 2.649.576, consiste à entourer l'inducteur par une cage de blindage en un matériau amagnétique, le fond de la cage étant fermé également par une plaque en matériau amagnétique. Cette solution permet de réduire les perturbations rayonnées et conduites définies précédemment. Cependant, elle est mieux adaptée aux appareils de cuisson à usage professionnel et reste difficilement transposable au domaine du grand public dans lequel il est nécessaire de prévoir des appareils les plus compacts possibles.

Or, dans la demande de brevet français FR 2.649.576, le fond de la cage de blindage doit être à une distance minimum de l'inducteur, trop importante pour le domaine du grand public.

Par ailleurs, les différentes plaques utilisées pour former la cage de blindage sont le siège de courants de Foucault, et génèrent à leur tour des perturbations conduites et/ou rayonnées.

La présente invention a pour but de proposer un système de blindage pour inducteur qui ne présente pas les inconvénients et limitations précédents.

Plus précisément, la présente invention a pour premier objet un appareil de cuisson à induction du type comportant au moins un foyer de cuisson comprenant un inducteur, un onduleur qui fournit à l'inducteur un courant alternatif haute fréquence et qui est alimenté par un réseau d'énergie électrique basse fréquence au travers d'un filtre haute fréquence, et au moins un élément en matériau amagnétique et conducteur électrique minimisant le rayonnement parasite de l'inducteur, l'appareil étant caractérisé en ce que l'élément en matériau amagnétique et conducteur électrique est connecté électriquement au réseau par l'intermédiaire du filtre haute fréquence.

Par ailleurs, un deuxième objet de l'invention est un appareil de cuisson à induction du type comportant une pluralité de foyers de cuisson comprenant un inducteur et un élément en matériau amagnétique et conducteur électrique minimisant le rayonnement parasite de l'inducteur par foyer de cuisson, et un onduleur unique qui fournit un courant alternatif haute fréquence aux inducteurs des différents foyers de cuisson et qui est alimenté par un réseau d'énergie électrique basse fréquence au travers d'un filtre haute fréquence, l'appareil étant caractérisé en ce que chaque élément en matériau amagnétique et conducteur électrique est connecté électriquement au réseau par l'intermédiaire du filtre haute fréquence.

En outre, l'invention a également pour troisième objet un appareil de cuisson à induction du type comportant une pluralité de foyers de cuisson comprenant un inducteur et un circuit magnétique par foyer de cuisson, un unique élément en matériau amagnétique et conducteur électrique minimisant le rayonnement parasite des inducteurs et servant de support pour tous les inducteurs, et un onduleur unique qui fournit un courant alternatif haute fréquence aux inducteurs des différents foyers de cuisson et qui est alimenté par un réseau d'énergie électrique basse fréquence au travers d'un filtre haute fréquence, l'appareil étant caractérisé en ce que l'unique élément en matériau amagnétique et conducteur électrique est connecté électriquement au réseau par l'intermédiaire du filtre haute fréquence.

L'invention sera mieux comprise au vu de la description suivante faite en référence aux figures annexées, dans lesquelles :
- Les figures 1 et 2 illustrent schématiquement les connexions existant entre un générateur et différents éléments constituant un foyer de cuisson à induction vu en coupe, selon deux variantes possibles de réalisation conformes à l'invention ;
- La figure 3 illustre schématiquement une variante de réalisation préférée selon l'invention.

Par souci de clarté, les éléments communs à toutes les figures portent la même référence.

Sur toutes les figures, on a représenté schématiquement en coupe un foyer pour appareil de cuisson à induction, comportant un inducteur 1 placé sous un plan de travail 2, par exemple en vitrocéramique, et un générateur 3, connecté au secteur d'alimentation basse fréquence général symbolisé en 4. La surface inférieure du plan de travail 2 et l'inducteur 1 sont de préférence séparés par une couche 5 de matériau isolant thermique. Le foyer de cuisson auquel s'applique la présente invention comporte également un élément 6 en matériau amagnétique et conducteur électrique, par exemple en aluminium, servant au blindage de l'inducteur. Cet élément 6 peut être notamment une plaque ou un grillage.

Les blindages en matériau amagnétique et conducteur électrique, du type aluminium, utilisés jusqu'à présent sont parcourus par des parasites qui ne sont pas éliminés, du fait que les blindages sont soit flottants, soit reliés à la terre. Il en résulte que ces blindages sont eux-mêmes générateurs de perturbations.

Pour remédier à ce problème, la présente invention propose de relier électriquement le blindage au secteur. Il est cependant nécessaire de prendre des précautions de filtrage, car il ne faut pas réinjecter les parasites sur le réseau d'alimentation.

Or, les générateurs utilisés pour alimenter en courant l'inducteur sont déjà équipés d'un filtre haute fréquence leur permettant d'être connectés au secteur d'alimentation sans engendrer de perturbations.

Plus précisément, comme représenté schématiquement sur les différentes figures, un générateur 3 pour inducteur qui est branché sur le secteur d'alimentation 4 comprend un filtre 30 suivi par exemple d'un onduleur 31 destiné à alimenter l'inducteur 1 en courant haute fréquence, par l'intermédiaire de deux connexions électriques schématisées en 7a et 7b.

L'invention consiste à utiliser ce filtre 30 préexistant et destiné aux fréquences des courants haute fréquence dans l'inducteur pour évacuer les parasites générés dans les blindages sans perturber le réseau d'alimentation. Pour ce faire, l'invention propose de relier électriquement le blindage 6 à un potentiel filtré du générateur, par exemple au neutre ou à la phase.

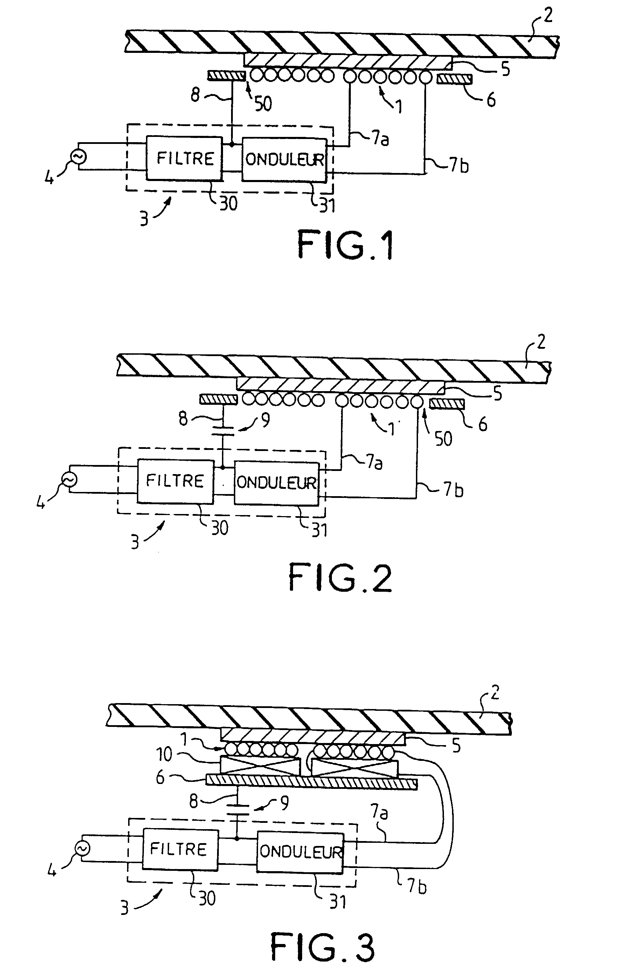

La liaison électrique 8 entre le blindage 6 et le potentiel filtré du générateur peut être directe, comme schématisé sur la figure 1.

Cependant, pour des raisons de sécurité de l'utilisateur, notamment en cas de détérioration du plan en vitrocéramique 2, la liaison électrique s'effectue de préférence par l'intermédiaire d'un condensateur 9 (voir figure 2) qui permet l'isolation galvanique du blindage, tout en permettant la polarisation.

Dans les variantes de réalisation de l'invention représentées sur les figures 1 et 2, l'élément 6 est une plaque située sensiblement dans le plan de l'inducteur 1, et possède une ouverture 50 pour le passage de l'inducteur. Cette variante permet de minimiser les perturbations rayonnées vers l'extérieur par l'inducteur 1.

Dans une variante préférentielle représentée sur la figure 3, le foyer de cuisson à induction comporte en outre un circuit magnétique 10 disposé sous l'inducteur. La plaque 6 est alors placée directement sous ce circuit magnétique où elle tient simultanément le rôle de blindage contre les perturbations rayonnées et conduites de l'inducteur, et celui de support de l'ensemble constitué par l'inducteur et le circuit magnétique. De manière avantageuse, la connexion électrique 7a entre le centre de l'inducteur 1 et l'onduleur 31 est un fil passant par une ouverture centrale du circuit magnétique 10, correspondant au centre de l'inducteur, puis entre le circuit magnétique 10 et le blindage 6. De la même façon, la deuxième connexion électrique 7b contourne le blindage 6.

On obtient ainsi un foyer de cuisson à induction très compact dans lequel on a minimisé de façon optimale d'une part, les perturbations conduites et rayonnées par l'inducteur, grâce au blindage 6, et d'autre part, les perturbations engendrées par le blindage lui-même, grâce à la liaison électrique 8. Les mesures ont montré qu'un appareil de cuisson conforme à l'invention permettait d'obtenir un gain appréciable sur les perturbations conduites par rapport aux appareils connus.

D'autres variantes peuvent être envisagées, sans sortir du cadre de la présente invention. Notamment, on peut réaliser un appareil de cuisson comportant plusieurs foyers à induction alimentés par un seul générateur. Chaque foyer comporte un blindage disposé soit, selon la configuration des figures 1 et 2, autour de l'inducteur, soit, selon la configuration de la figure 3, sous l'ensemble inducteur-circuit magnétique. Chaque blindage relatif à chaque foyer peut être relié, conformément à l'invention, au secteur, par l'intermédiaire du filtre du générateur. Avantageusement, tous les blindages peuvent être reliés audit filtre par l'intermédiaire d'un unique condensateur.

Ce blindage possède un effet capacitif avec le bobinage de l'inducteur et avec la charge. Le fait de le relier à un potentiel fixe limite cet effet capacitif.

On peut également envisager un appareil de cuisson comportant une pluralité de foyers comportant chacun un inducteur et un circuit magnétique, une seule plaque de blindage, reliée au secteur par l'intermédiaire du filtre, servant de support pour tous les ensembles inducteur-circuit magnétique.

## Revendications

1. Appareil de cuisson à induction du type comportant au moins un foyer de cuisson comprenant un inducteur (1), un onduleur (31) qui fournit à l'inducteur (1) un courant alternatif haute fréquence et qui est alimenté par un réseau d'énergie électrique basse fréquence (4) au travers d'un filtre haute fréquence (30) et au moins un élément (6) en matériau amagnétique et conducteur électrique minimisant le rayonnement parasite de l'inducteur (1), l'appareil étant caractérisé en ce que l'élément (6) en matériau amagnétique et conducteur électrique est connecté (8) électriquement au réseau (4) par l'intermédiaire du filtre haute fréquence (30).

2. Appareil selon la revendication 1, caractérisé en ce que l'élément (6) en matériau amagnétique et conducteur électrique est connecté électriquement au filtre haute fréquence (30), côté onduleur (31), par une liaison électrique (8) directe.

3. Appareil selon la revendication 1, caractérisé en ce que l'élément (6) en matériau amagnétique et conducteur électrique est connecté électriquement au filtre haute fréquence (30), côté onduleur (30), par l'intermédiaire d'un condensateur (9) pour une isolation galvanique permettant la polarisation.

4. Appareil selon l'une quelconque des revendications précédentes, caractérisé en ce que l'élément (6) en matériau amagnétique et conducteur électrique est une plaque située sensiblement dans le plan de l'inducteur (1), et comporte une ouverture (50) pour le passage de l'inducteur (1).

5. Appareil selon l'une quelconque des revendications 1 à 3, caractérisé en ce qu'il comporte en outre un circuit magnétique (10) disposé sous l'inducteur (1), et en ce que l'élément (6) en matériau amagnétique et conducteur électrique est une plaque qui supporte directement l'ensemble constitué par l'inducteur (1) et le circuit magnétique (10).

6. Appareil de cuisson à induction du type comportant une pluralité de foyers de cuisson comprenant un inducteur (1) et un élément (6) en matériau amagnétique et conducteur électrique minimisant le rayonnement parasite de l'inducteur (1) par foyer de cuisson, et un onduleur unique (31) qui fournit un courant alternatif haute fréquence aux inducteurs (1) des différents foyers de cuisson et qui est alimenté par un réseau d'énergie électrique basse fréquence (4) au travers d'un filtre haute fréquence (30), l'appareil étant caractérisé en ce que chaque élément (6) en matériau amagnétique et conducteur électrique est connecté électriquement au réseau (4) par l'intermédiaire du filtre haute fréquence (30).

7. Appareil selon la revendication 6, caractérisé en ce que chaque élément (6) en matériau amagnétique et conducteur électrique est connecté électriquement au filtre haute fréquence (30) par l'intermédiaire d'un condensateur (9).

8. Appareil de cuisson à induction du type comportant une pluralité de foyers de cuisson comprenant un inducteur (1) et un circuit magnétique (10) par foyer de cuisson, un unique élément (6) en matériau amagnétique et conducteur électrique minimisant le rayonnement parasite des inducteurs et servant de support pour tous les inducteurs, et un onduleur unique (31) qui fournit un courant alternatif haute fréquence aux inducteurs (1) des différents foyers de cuisson et qui est alimenté par un réseau d'énergie électrique basse fréquence (4) au travers d'un filtre haute fréquence (30), l'appareil étant caractérisé en ce que l'unique élément (6) en matériau amagnétique et conducteur électrique est connecté électriquement au réseau (4) par l'intermédiaire du filtre haute fréquence (30).

## Patentansprüche

1. Induktionskochgerät vom Typ mit mindestens einer Kochmulde, die einen Induktor (1) enthält, sowie einen Wechselrichter (31), der dem Induktor (1) einen Hochfrequenz-Wechselstrom liefert und der über ein Hochfrequenzfilter (30) von einem niederfrequenten Stromnetz (4) versorgt wird, und mindestens ein Element (6) aus nichtmagnetischem und elektrisch leitfähigem Material, das die parasitäre Abstrahlung des Induktors (1) minimiert, wobei das Gerät dadurch gekennzeichnet ist, daß das Element (6) aus nichtmagnetischem und elektrisch leitfähigem Material über das Hochfrequenzfilter (30) elektrisch mit dem Netz (4) verbunden (8) ist.

2. Gerät nach Anspruch 1, dadurch gekennzeichnet, daß das Element (6) aus nichtmagnetischem und elektrisch leitfähigem Material durch eine direkte elektrische Verbindung (8) auf der Seite des Wechselrichters (31) elektrisch mit dem Hochfrequenzfilter (30) verbunden ist.

3. Gerät nach Anspruch 1, dadurch gekennzeichnet, daß das Element (6) aus nichtmagnetischem und elektrisch leitfähigem Material auf der Seite des Wechselrichters (31) mit dem Hochfrequenzfilter (30) verbunden ist über einen Kondensator (9) zur galvanischen Isolierung, die eine Polarisation gestattet.

4. Gerät nach einem der vorstehenden Ansprüche, dadurch gekennzeichnet, daß das Element (6) aus nichtmagnetischem und elektrisch leitfähigem Material eine Platte ist, die sich in etwa in der Ebene des Induktors (1) befindet und eine Öffnung (50) für den Durchgang des Induktors (1) aufweist.

5. Gerät nach einem der vorstehenden Ansprüche 1 bis 3, dadurch gekennzeichnet, daß es zusätzlich einen Magnetkreis (10) enthält, der unterhalb des Induktors (1) angeordnet ist, und daß das Element (6) aus nichtmagnetischem und elektrisch leitfähigem Material eine Platte ist, die direkt die aus dem Induktor (1) und dem Magnetkreis (10) gebildete Einheit trägt.

6. Induktionskochgerät eines Typs mit einer Mehrzahl von Kochmulden, das einen Induktor (1) und ein Element (6) aus nichtmagnetischem und elektrisch leitfähigem Material, das die parasitäre Strahlung des Induktors (1) minimiert, pro Kochmulde enthält, sowie einen einzigen Wechselrichter (31), der den Induktoren (1) der verschiedenen Kochmulden einen Hochfrequenz-Wechselstrom liefert und der über ein Hochfrequenzfilter (30) von einem niederfrequenten Stromnetz (4) versorgt wird, wobei das Gerät dadurch gekennzeichnet ist, daß jedes Element (6) aus nichtmagnetischem und elektrisch leitfähigem Material über das Hochfrequenzfilter (30) elektrisch mit dem Netz (4) verbunden ist.

7. Gerät nach Anspruch 6, dadurch gekennzeichnet, daß jedes Element (6) aus nichtmagnetischem und elektrisch leitfähigem Material über einen Kondensator (9) elektrisch mit dem Hochfrequenzfilter (30) verbunden ist.

8. Induktionskochgerät eines Typs mit einer Mehrzahl von Kochmulden, das einen Induktor (1) und einen Magnetkreis (10) pro Kochmulde enthält, sowie ein einziges Element (6) aus nichtmagnetischem und elektrisch leitfähigem Material, das die parasitäre Strahlung der Induktoren (1) minimiert und als Träger für alle Induktoren dient, sowie einen einzigen Wechselrichter (31), der den Induktoren (1) der verschiedenen Kochmulden einen Hochfrequenz-Wechselstrom liefert und der über ein Hochfrequenzfilter (30) von einem niederfrequenten Stromnetz (4) versorgt wird, wobei das Gerät dadurch gekennzeichnet ist, daß das einzige Element (6) aus nichtmagnetischem und elektrisch leitfähigem Material über das Hochfrequenzfilter (30) elektrisch mit dem Netz (4) verbunden ist.

## Claims

1. Apparatus for cooking by induction, of the type having at least one cooking range comprising an inductor (1), a current inverter (31) which supplies the inductor (1) with a high-frequency alternating current and which is powered by a low-frequency electrical energy network (4) through a high-frequency filter (30) and at least one electricity-conducting element (6) made from non-magnetic material which minimises stray radiation from the inductor (1), the apparatus being characterised in that the electricity-conducting element (6) made from non-magnetic material is electrically wired (8) to the network (4) via the high-frequency filter (30).

2. Apparatus according to claim 1, characterised in that the electricity-conducting element (6) made from non. magnetic material is electrically wired to the high-frequency filter (30), on the current inverter (31) side, by a direct electrical connection (8).

3. Apparatus according to claim 1, characterised in that the electricity-conducting element (6) made from non-magnetic material is electrically wired to the high-frequency filter (30), on the current inverter (31) side, via a condenser (9) for galvanic insulation which makes polarisation possible.

4. Apparatus according to any one of the preceding claims, characterised in that the electricity-conducting element (6) made from non-magnetic material is a plate situated substantially in the plane of the inductor (1), and incorporates an opening (50) for the inductor (1) to pass through.

5. Apparatus according to any one of claims 1 to 3, characterised in that it also comprises a magnetic circuit (10) arranged beneath the inductor (1), and in that the electricity-conducting element (6) made from non-magnetic material is a plate which directly supports the assembly constituted by the inductor (1) and the magnetic circuit (10).

6. Apparatus for cooking by induction, of the type having a plurality of cooking ranges comprising an inductor (1) and an electricity-conducting element (6) made from non-magnetic material which minimises stray radiation from the inductor (1) per cooking range, and a single current inverter (31) which supplies a high-frequency alternating current to the inductors (1) of the various cooking ranges and which is powered by a low-frequency electrical energy network (4) through a high-frequency filter (30), the apparatus being characterised in that each electricity-conducting element (6) made from non-magnetic material is electrically wired to the network (4) via the high-frequency filter (30).

7. Apparatus according to claim 6, characterised in that each electricity-conducting element (6) made from non-magnetic material is electrically wired to the high-frequency filter (30) via a condenser (9).

8. Apparatus for cooking by induction, of the type having a plurality of cooking ranges comprising an inductor (1) and a magnetic circuit (10) per cooking range, a single electricity-conducting element (6) made from non-magnetic material which minimises stray radiation from the inductors and acts as a support for all the inductors, and a single current inverter (31) which supplies a high-frequency alternating current to the inductors (1) of the various cooking ranges and which is powered by a low-frequency electrical energy network (4) through a high-frequency filter (30), the apparatus being characterised in that the single electricity-conducting element (6) made from non-magnetic material is electrically wired to the network (4) via the high-frequency filter (30).
